# EUROPEAN PATENT APPLICATION

(11) **EP 4 354 106 A1**
(43) Date of publication of application: **17.04.2024**
(21) Application number: 22818183.0
(22) Date of filing: 24.03.2022
(51) Int. Cl.: G01L 1/22, G01B 7/16

(54) **STRAIN GAUGE**

(30) Priority: 09.06.2021 JP 2021096391
(71) Applicant: Minebea Mitsumi Inc., Kitasaku-gun, Nagano 3890293 (JP)
(72) Inventor: ONO, Aya, Kitasaku-gun, Nagano 389-0293 (JP); OGASA, Yosuke, Kitasaku-gun, Nagano 389-0293 (JP); ASAKAWA, Toshiaki, Kitasaku-gun, Nagano 389-0293 (JP); YUGUCHI, Akiyo, Kitasaku-gun, Nagano 389-0293 (JP); KITAMURA, Atsushi, Kitasaku-gun, Nagano 389-0293 (JP)
(74) Representative: Zabel, Julia Elisabeth
(86) International application number: PCT/JP2022/013897
(87) International publication number: WO 2022/259701

(57) **Abstract**

This strain gauge is mounted on a Roberval-type strain body, and has: a flexible substrate; and a resistor provided on the substrate and formed of a film containing Cr, CrN, and Cr2N, wherein the resistor has a film thickness of 6 nm to 100 nm.

## Description

### Technical Field

The present invention relates to a strain gauge and a load cell.

### Background Art

A strain gauge has been known that includes a resistor on a substrate, and is attached to an object to be measured, to detect strain of the object to be measured. For example, the strain gauge is used in sensor applications, such as a sensor to detect strain of a material or a sensor to detect ambient temperature (see, for example, Patent Document 1).

### Related Art Documents

### Patent Documents

Patent Document 1: Japanese Laid-Open Patent Application No. 2001-221696

### Summary of the Invention

### Problem to be Solved by the Invention

However, in addition to being used such sensor applications, a strain gauge is used in a weighing application in some cases; in such cases, it is necessary to satisfy more stringent standards related to creep as compared to sensor applications. Thus, there are cases where even a strain gauge that can be used in a sensor application cannot be used in a weighing application.

The present invention has been done in view of the point described above, and has an object to provide a strain gauge that can be used in a weighing application.

### Means for Solving Problem

The present strain gauge is a strain gauge installed on a Roberval-type strain generator, and includes a substrate having flexibility; and a resistor formed of a film that contains Cr, CrN, and Cr₂N over the substrate, wherein a film thickness of the resistor is greater than or equal to 6 nm and less than or equal to 100 nm.

### Advantageous Effects of the Invention

According to a disclosed technique, a strain gauge that can be used in a weighing application can be provided.

### Brief Description of the Drawings

[FIG. 1] FIG. 1 is a plan view exemplifying a load cell according to a first embodiment;
[FIG. 2] FIG. 2 is a side view exemplifying the load cell according to the first embodiment;
[FIG. 3] FIG. 3 is a plan view exemplifying a strain gauge according to the first embodiment;
[FIG. 4] FIG. 4 is a cross-sectional view (part 1) exemplifying the strain gauge according to the first embodiment;
[FIG. 5] FIG. 5 is a cross-sectional view (part 2) exemplifying the strain gauge according to the first embodiment;
[FIG. 6] FIG. 6 is a diagram for describing a method of measuring a creep amount and a creep recovery amount;
[FIG. 7] FIG. 7 is a diagram illustrating a result of an investigation on the film thickness of a resistor, and the creep amount and the creep recovery amount;
[FIG. 8] FIG. 8 is a diagram illustrating a result of an experiment on the strain limit; and
[FIG. 9] FIG. 9 is a cross-sectional view (part 3) exemplifying the strain gauge according to the first embodiment.

### Embodiments for Carrying Out the Invention

In the following, embodiments will be described with reference to the drawings. In the drawings, the same reference numerals are attached to the same components, and duplicate descriptions may be omitted.

### <First embodiment>

### [Load cell]

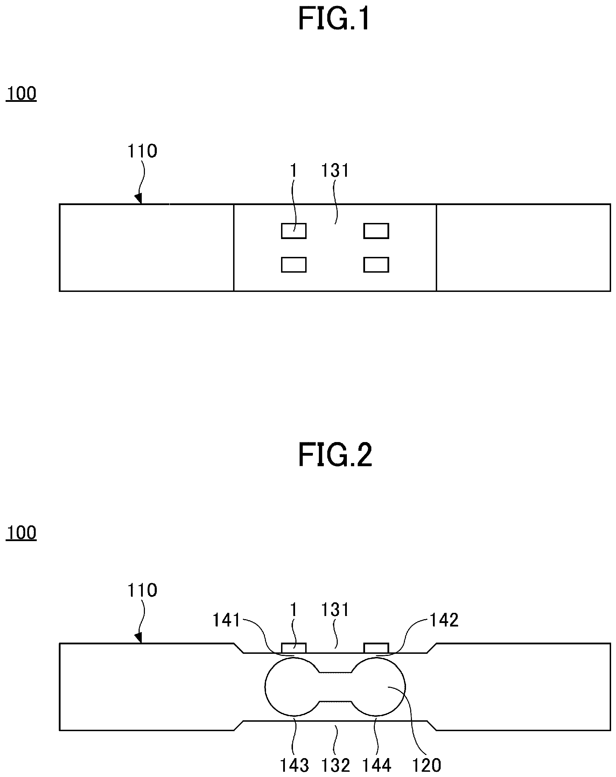

FIG. 1 is a plan view exemplifying a load cell according to a first embodiment. FIG. 2 is a side view exemplifying the load cell according to the first embodiment. Referring to FIGs. 1 and 2, the load cell 100 includes a strain generator 110 and strain gauges 1.

The strain generator 110 is a Roberval-type strain generator in which a through hole 120, a recess 131, and a recess 132 are provided in a metal block having a shape of substantially rectangular parallelepiped. The strain generator 110 is formed of, for example, a metal such as SUS304, aluminum alloy, or iron.

The through hole 120 penetrates through the strain generator 110 from one side to the other side. The through hole 120 is formed to have, for example, in side view, a spectacles-like shape in which two circular holes are arranged to be separated from each other, and parts of the opposing arcs of the respective holes are communicated with each other.

The recesses 131 and 132 are arranged to be on sides opposite to each other on the strain generator 110 in the vertical direction so as to have the through hole 120 interposed in-between. The recess 131 is recessed from the upper surface of the strain generator 110 toward the through hole 120 side, and the recess 132 is recessed from the lower surface of the strain generator 110 toward the through hole 120 side.

Portions interposed between the through hole 120 and the recess 131 or 132 form thin wall portions 141 to 144. The thin wall portions 141 to 144 are strain-generated portions in which strain is generated by an external force. Four strain gauges 1 are arranged in a matrix shape on the thin wall portion 141 and the thin wall portion 142 in the recess 131. In each of the strain gauges 1, the grid direction of a resistor is oriented, for example, in the longitudinal direction of the strain generator 110.

Each of the strain gauges 1 is affixed, for example, via an adhesive layer, onto the thin wall portion 141 and onto the thin wall portion 142 in the recess 131. The material of the adhesive layer is not limited in particular, as long as having a function of adhering the strain gauge 1 with the strain generator 110, and can be appropriately selected in accordance with the purpose; for example, an epoxy resin, modified epoxy resin, silicone resin, modified silicone resin, urethane resin, modified urethane resin, or the like can be used. In addition, a material such as a bonding sheet may be used. The thickness of the adhesive layer is not limited in particular, and can be selected appropriately in accordance with the purpose; for example, the thickness can be approximately 0.1 um to 50 µm.

When the load cell 100 receives a load from the outside, stress is generated in the thin wall portions 141 to 144 as the strain-generated portions, and strain is generated. The strain gauges 1 detect change in resistance values caused by the strain of the thin wall portions 141 to 144. For example, by connecting the four strain gauges 1 to form a full bridge and arithmetically processing the change in the resistance values, the load received from the outside can be calculated.

### [Strain gauge]

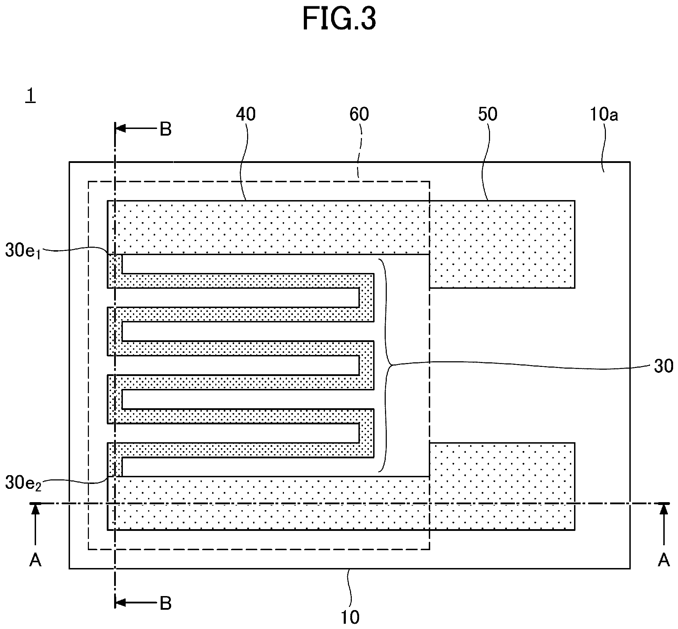

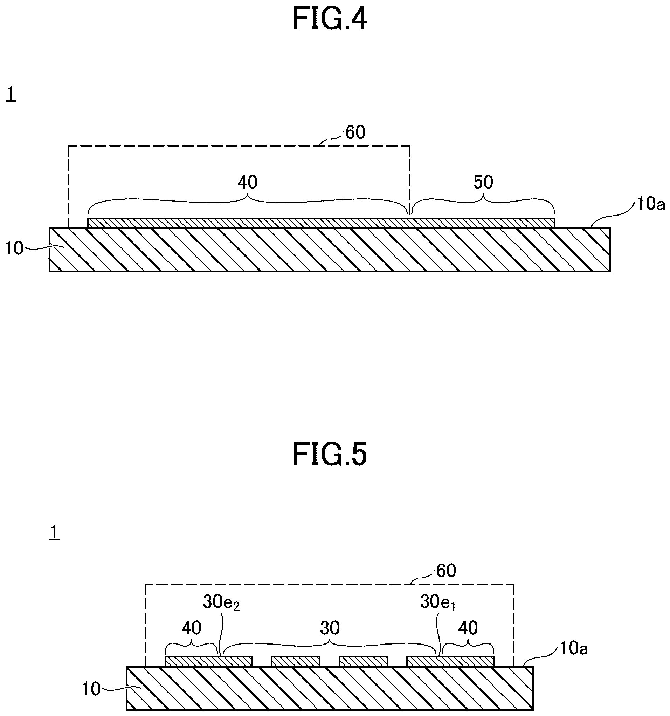

FIG. 3 is a plan view exemplifying the strain gauge according to the first embodiment. FIG. 4 is a cross-sectional view (part 1) exemplifying the strain gauge according to the first embodiment, and illustrates a cross section taken along a line A-A in FIG. 3. FIG. 5 is a cross-sectional view (part 2) exemplifying the strain gauge according to the first embodiment, and illustrates a cross section taken along a line B-B in FIG. 3.

Referring to FIGs. 3 to 5, the strain gauge 1 includes a substrate 10, a resistor 30, a wire 40, electrodes 50, and a cover layer 60. In FIGs. 3 to 5, for the sake of convenience, only the outer edge of the cover layer 60 is indicated by a dashed line. Note that the cover layer 60 may be provided as necessary.

Note that in FIGs. 3 to 5, for the sake of convenience, in the strain gauge 1, a side of the substrate 10 where the resistor 30 is provided is referred to as the upper side or one side, and a side of the substrate 10 where the resistor 30 is not provided is referred to as the lower side or the other side. Further, for each component, a surface on the side where the resistor 30 is provided is referred to as one surface or the upper surface, and a surface on the side where the resistor 30 is not provided is referred to as the other surface or the lower surface. However, the strain gauge 1 can be used in a state of being upside down, or can be disposed at any angle. Further, a plan view means that an object is viewed in a direction normal to the upper surface 10a of the substrate 10, and a planar shape refers to a shape of an object when viewed in the direction normal to the upper surface 10a of the substrate 10.

The substrate 10 is a member that serves as a base layer for forming the resistor 30 and the like, and has flexibility. The film thickness of the substrate 10 is not limited in particular, and can be appropriately selected in accordance with the purpose; for example, the thickness may be designed to be approximately 5 um to 500 um. In particular, the film thickness of the substrate 10 is 5 um to 200 um is favorable in terms of strain transfer and dimensional stability with respect to the environment, and the film thickness 10 um or thicker is more favorable in terms of insulation.

The substrate 10 can be formed of an insulating resin film such as a PI (polyimide) resin, an epoxy resin, a PEEK (polyether ether ketone) resin, a PEN (polyethylene naphthalate) resin, a PET (polyethylene terephthalate) resin, a PPS (polyphenylene sulfide) resin, LCP (Liquid Crystal Polymer) resin, a polyolefin resin, or the like. Note that the film refers to a member having a film thickness of approximately less than or equal to 500 um and flexibility.

Here, the "formed of an insulating resin film" is not intended to preclude the substrate 10 from including fillers, impurities, or the like in the insulating resin film. The substrate 10 may be formed of, for example, an insulating resin film containing fillers such as silica or alumina.

As the materials of the substrate 10 other than resin, for example, crystalline materials such as SiO₂, ZrO₂ (including YSZ), Si, Si₂N₃, Al₂O₃ (including sapphire), ZnO, perovskite-based ceramics (CaTiOs, BaTiO₃), and the like may be enumerated, and further, amorphous glass and the like may be enumerated. In addition, a metal such as aluminum, aluminum alloy (duralumin), titanium, or the like may be used as the material of the substrate 10. In this case, on the metal substrate 10, for example, an insulating film is formed.

The resistor 30 is a thin film formed in a predetermined pattern, and is a sensitive part whose resistance varies in response to strain. The resistor 30 may be formed directly on the upper surface 10a of the substrate 10, or may be formed above the upper surface 10a of the substrate 10, having other intervening layer(s) in-between. Note that in FIG. 3, for the sake of convenience, the resistor 30 is illustrated in a dense dot pattern.

The resistor 30 has a structure in which multiple long and narrow portions are arranged at predetermined intervals having the longitudinal direction oriented in the same direction (the direction of the line A-A in FIG. 3), and the ends of adjacent long and narrow portions are connected alternately at both ends, to form a back-and-forth zigzagging structure as a whole. The longitudinal direction of the multiple long and narrow portions is defined as the grid direction, and the direction perpendicular to the grid direction is defined as the grid width direction (the direction of the line B-B in FIG. 3).

One end in the longitudinal direction of two long and narrow portions positioned at the outermost sides in the grid width direction are bent in the grid width direction to form respective terminals 30e₁ and 30e₂ in the grid width direction of the resistor 30. The respective terminals 30e₁ and 30e₂ in the grid width direction of the resistor 30 are electrically connected to the electrodes 50 via the wire 40. In other words, the wire 40 electrically connects the respective terminals 30e₁ and 30e₂ in the grid width direction of the resistor 30 with the respective electrodes 50.

The resistor 30 can be formed of, for example, a material that contains Cr (chromium), a material that contains Ni (nickel), or a material that contains both Cr and Ni. In other words, the resistor 30 can be formed of a material that contains at least one of Cr or Ni. As the material that contains Cr, for example, a Cr composite film may be considered. As the material that contains Ni, for example, Cu-Ni (copper nickel) may be considered. As the material that contains both Cr and Ni, for example, Ni-Cr (nickel chromium) may be considered.

Here, the Cr composite film is a composite film of Cr, CrN, Cr₂N, and the like. The Cr composite film may contain incidental impurities such as chromium oxide.

For example, in the case of the resistor 30 being a Cr composite film, by having α-Cr (alpha-chromium) contained as a main component that has a stable crystalline phase, the stability of the gauge characteristics can be improved. In addition, by having the resistor 30 containing α-Cr as the main component, the strain gauge 1 can be made to have a gauge factor of greater than or equal to 10, and have a gauge factor temperature coefficient TCS and a temperature coefficient of resistance TCR that falls within a range of - 1,000 ppm/°C to +1,000 ppm/°C. Here, the main component means that a target substance is at 50% by weight or more of total substances that constitute the resistor; from the viewpoint of improving the gauge characteristics, the resistor 30 favorably contains α-Cr at 80% by weight or more, and more favorably, the resistor 30 contains α-Cr at 90% by weight or more. Note that α-Cr is Cr having a bcc structure (body-centered cubic structure).

In addition, in the case of the resistor 30 being the Cr composite film, CrN and Cr₂N in the Cr composite film are favorably contained by less than or equal to 20% by weight. By having CrN and Cr₂N contained in the Cr composite film by less than or equal to 20% by weight, reduction in the gauge factor can be suppressed.

In addition, the percentage of Cr₂N in CrN and Cr₂N is favorably greater than or equal to 80% by weight and less than 90% by weight, and more favorably greater than or equal to 90% by weight and less than 95% by weight. By having the percentage of Cr₂N in CrN and Cr₂N greater than or equal to 90% by weight and less than 95% by weight, reduction in TCR (negative TCR) becomes further significant by Cr₂N having a semiconductor characteristic. Further, by reducing ceramicization, brittle fracture can be reduced.

Meanwhile, in the case where a trace amount of N₂ or atomic N is mixed and present in the film, owing to an external environment (e.g., in a high temperature environment), these particles escape to the outside of the film, and thereby, a change occurs in film stress. By producing chemically stable CrN, a stable strain gauge can be obtained without generating unstable N described above.

The wire 40 is formed on the substrate 10 and electrically connected to the resistor 30 and the electrodes 50. The wire 40 is not limited to a straight line, and can be any pattern. In addition, the wire 40 can have any width and any length as appropriate. Note that in FIG. 3, the wire 40 and the electrodes 50 are illustrated in a dot pattern sparser than in the resistor 30.

The electrodes 50 are formed on the substrate 10, and are electrically connected to the resistor 30 via the wire 40, and are formed, for example, to be wider than the wire 40 to have an approximately rectangular shape. The electrodes 50 are a pair of electrodes for outputting to the outside change in resistance value of the resistor 30 caused by strain, to which, for example, lead wires or the like for external connection are joined.

Note that, for the sake of convenience, the resistor 30, the wire 40, and the electrodes 50 are indicated by different reference numerals; however, these elements can be integrally formed of the same material in the same process. Therefore, the resistor 30, the wire 40, and the electrodes 50 have substantially the same thickness.

A conductive layer formed of a material having a resistance lower than the resistor 30 may be laminated on the wire 40 and the electrodes 50. The material of the conductive layer to be laminated is not limited in particular as long as the material has a resistance lower than the resistor 30, and can be selected appropriately in accordance with the purpose. For example, in the case where the resistor 30 is a Cr composite film, Cu, Ni, Al, Ag, Au, Pt, or the like; an alloy of any of these metals; a compound of any of these metals; or a laminate film in which any of these metals are suitably laminated may be enumerated. The thickness of the conductive layer is not limited in particular, and may be suitably selected in accordance with the purpose, and may be, for example, approximately 3 um to 5 µm.

In this way, by laminating a conductive layer formed of a material having a resistance lower than the resistor 30 on the wire 40 and the electrodes 50, the wire 40 comes to have a resistance lower than the resistor 30, and thereby, the wire 40 can be suppressed from functioning as a resistor. As a result, the accuracy of strain detection by the resistor 30 can be improved.

In other words, by providing the wire 40 having a resistance lower than the resistor 30, the substantial sensing portion of the strain gauge 1 can be limited to a local area where the resistor 30 is formed. Therefore, the accuracy of strain detection by the resistor 30 can be improved.

In particular, in a highly sensitive strain gauge having a gauge factor of 10 or greater using a Cr composite film as the resistor 30, limiting the substantial sensing portion to a local area where the resistor 30 is formed by making the wire 40 less resistive than the resistor 30 exhibits a remarkable effect on improving the accuracy of strain detection. In addition, making the wire 40 less resistive than the resistor 30 also brings an effect on reducing the lateral sensitivity.

The cover layer 60 is formed on the substrate 10, covers the resistor 30 and the wire 40, yet leaves the electrodes 50 exposed. Part of the wire 40 may be exposed from the cover layer 60. By providing the cover layer 60 that covers the resistor 30 and the wire 40, mechanical damage or the like can be prevented from occurring in the resistor 30 and the wire 40. In addition, by providing the cover layer 60, the resistor 30 and the wire 40 can be protected against moisture or the like. Note that the cover layer 60 may be provided to cover all portions but the electrodes 50.

The cover layer 60 can be formed of, for example, an insulating resin including a PI resin, an epoxy resin, a PEEK resin, a PEN resin, a PET resin, or a PPS resin, a composite resin (e.g., a silicone resin or a polyolefin resin), and the like. The cover layer 60 may contain fillers or pigments. The thickness of the cover layer 60 is not limited in particular, and can be appropriately selected in accordance with the purpose; for example, the thickness can be approximately 2 um to 30 µm.

### [Thickness of resistor (1)]

Here, a favorable thickness of the resistor 30 will be described in the case of using the strain gauge 1 for a weighing application.

In the case of using the strain gauge 1 in a weighing application, standards related to creep need to be satisfied. As the standards related to creep include, for example, accuracy class C1 (hereinafter referred to as the C1 standards) based on OIML R60, and accuracy class C2 (hereinafter referred to as the C2 standards) based on OIML R60 may be enumerated.

According to the C1 standards, the creep amount and the creep recovery amount need to be less than or equal to ±0.0735%. According to the C2 standards, the creep amount and the creep recovery amount need to be less than or equal to ±0.0368%. Note that in the case of using the strain gauge 1 in a weighing application, a rated creep amount and a rated creep recovery amount are approximately ±0.5%.

As a result of intensive investigation performed by the inventors, it was found that the creep was highly dependent on the film thickness of the resistor 30, and hence, in order to install the strain gauge 1 on a Roberval-type strain generator and satisfy the C1 standards and the C2 standards, the film thickness of the resistor 30 needed to made relatively thin.

Therefore, the inventors investigated the film thickness of the resistor 30 required for reducing the creep amount and the creep recovery amount. Specifically, in a product called FSU-15K provided with a Roberval-type strain generator manufactured by MinebeaMitsumi Inc., multiple samples whose film thickness of the resistor 30 of the strain gauge 1 was varied were prepared (in the four strain gauges 1, the film thickness of the respective resistor 30 was the same), and the creep amount and the creep recovery amount of each of the samples were measured. In the strain gauge 1, as the substrate 10, a film made of a polyimide resin having a film thickness of 25 um was used. In addition, a Cr composite film is used for the resistor 30. Note that FSU-15K is a load cell having a rated capacity of 15kgf provided with a Roberval-type strain generator formed of SUS304.

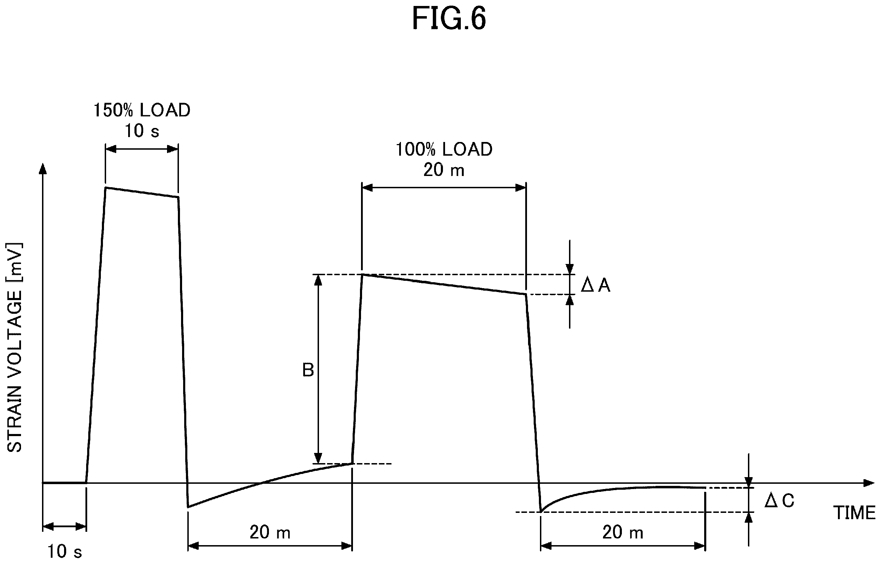

The amount of elastic deformation (strain amount) of a surface on which the resistor 30 was provided in the strain gauge 1 is an amount that changes while time elapses, and hence, the creep amount and the creep recovery amount can be measured by connecting the four strain gauges 1 to form a full bridge and executing arithmetic processing. This will be described in detail with reference to FIG. 6.

FIG. 6 is a diagram illustrating a method of measuring the creep amount and the creep recovery amount. In FIG. 6, the horizontal axis represents the time, and the vertical axis represents the strain voltage [mV].

First, 10 seconds after a measurement apparatus is powered on, a load of 150% is applied to the strain gauge 1 attached to a strain generator for 10 seconds, and then, the load is removed. After removing the load, when 20 minutes elapses, a load of 100% is applied to the strain gauge 1 attached to the strain generator for 20 minutes, and then, the load is removed. After removing the load, the method waits for 20 minutes to elapse.

The strain voltage varies, for example, as illustrated in FIG. 6. In FIG. 6, an absolute value B of a difference of the strain voltage is measured between at a point of time when 20 minutes has elapsed after removing the load of 150%, and at a point of time immediately after applying the load of 100%. In addition, an absolute value ΔA of a difference of the strain voltage is measured between at a point of time immediately after applying the load of 100%, and a point of time when 20 minutes has elapsed after applying the load of 100%. At this time, ΔA/B gives the creep amount. Next, an absolute value ΔC of a difference of the strain voltage is measured between at a point of time immediately after removing the load of 100%, and a point of time when 20 minutes has elapsed after removing the load of 100%

At this time, ΔC/B gives the creep recovery amount.

The load of 100% corresponds to 2 kg, and the load of 150% is 1.5 times the load of 100%.

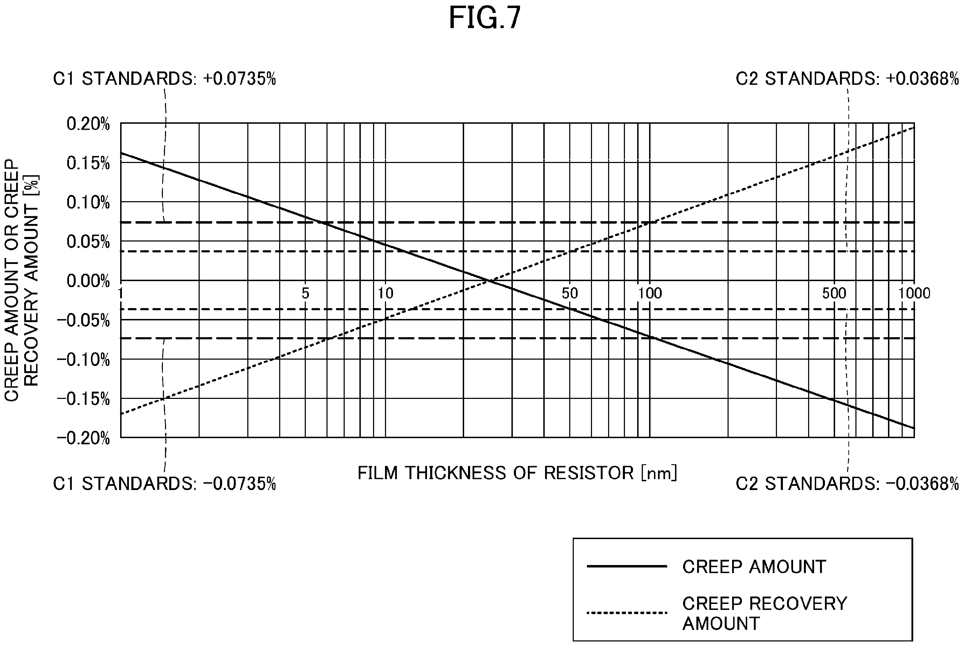

FIG. 7 is a diagram illustrating a result of an investigation on the film thickness of the resistor and the creep amount and the creep recovery amount, and summarizes results of measuring the creep amount and the creep recovery amount of the multiple strain gauges 1 whose film thickness of the resistor 30 of the strain gauge 1 was varied, by the measurement method illustrated in FIG. 6.

As illustrated in FIG. 7, as long as the film thickness of the resistor 30 is greater than or equal to 6 nm and less than or equal to 100 nm, the creep amount and the creep recovery amount of the C1 standards can be satisfied. In addition, as illustrated in FIG. 7, as long as the film thickness of the resistor 30 is greater than or equal to 11 nm and less than or equal to 50 nm, the creep amount and the creep recovery amount of the C2 standards can be satisfied. In other words, in the strain gauge 1 installed on the Roberval-type strain generator, by controlling the film thickness of the resistor 30 within a predetermined range, the creep amount and the creep recovery amount are improved, and thereby, the strain gauge 1 can be used for a weighing application. In addition, the inventors confirmed that the film thickness range of the resistor 30 described above satisfying the C1 or C2 standards was satisfied at least within a range of the width of the resistor 30 greater than or equal to 50 um and less than or equal to 500 µm.

Note that according to the investigation performed by the inventors, the film thickness of the resistor 30 that can satisfy the creep amount and the creep recovery amount of the C1 or C2 standards also depends on the structure of the strain generator. In other words, although the favorable film thickness range of the resistor 30 in the case of using a Roberval-type strain generator is as described above, in the case of using other strain generators of column-type, ring-type, diaphragm-type, and the like, there may be cases where the favorable film thickness range of the resistor 30 is different from the above.

### [Thickness of resistor (2)]

In order for the strain gauge 1 affixed to the strain generator to detect a greater amount of strain, the resistor 30 itself should not break (disconnection, etc.) during the course of the resistor 30 being extended and contracted; therefore, it is favorable to increase the strain limit (strain resistance) as much as possible. Note that the strain limit is a value of mechanical strain with which a crack or disconnection starts occurring when the strain is applied to the strain gauge.

According to an intensive investigation performed by the inventors, it was found that the film thickness of the resistor 30 not only affects the creep but also affects the strain limit. In other words, it was found that a thinner film thickness of the resistor 30 was less likely to lead to occurrences of cracks and disconnections when resistor 30 was strained.

Therefore, the inventors have investigated the film thickness of the resistor 30 required for improving the strain limit. Specifically, the inventors prepared multiple samples of three types of strain gauges 1 whose respective film thicknesses of the resistor 30 were 50 nm, 220 nm, and 800 nm, and applied strain to each of these samples, and examined occurrences of cracks and disconnections. In the strain gauge 1, as the substrate 10, a film made of a polyimide resin having a film thickness of 25 um was used. In addition, a Cr composite film was used for the resistor 30.

As a result of the examination, when the film thickness of the resistor 30 became thinner than a certain point, it was confirmed that cracks and disconnections tended to decrease as the film thickness became thinner, and it was found that the strain limit depended on the film thickness of the resistor 30.

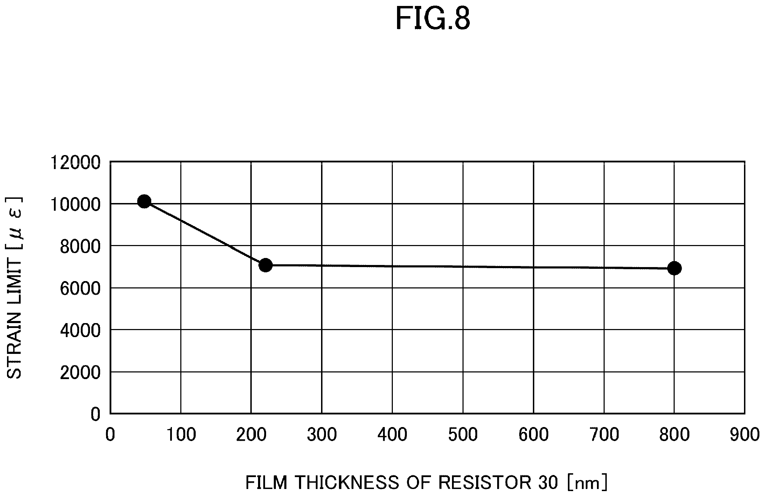

FIG. 8 is a diagram illustrating experimental results of the strain limit, and plots the minimum values of the strain limit in the multiple strain gauges. As illustrated in FIG. 8, in the experimental results by the inventors, the strain limit was almost constant at 7,000 µε or greater in the cases of the film thicknesses of the resistor 30 being 220 nm and 800 nm, whereas the strain limit was greater than or equal to 10,000 µε in the case of the film thickness of the resistor 30 being 50 nm.

In other words, when the film thickness of the resistor 30 became thinner than 220 nm, as the film thickness became thinner, a tendency was confirmed that cracks and disconnections decreased. Further, it was confirmed that, in the case of the film thickness of the resistor 30 being 50 nm, the strain limit was improved by approximately 30% compared with the cases of the film thicknesses of the resistor 30 being 220 nm and 800 nm.

Considering the results together with the results of [Film thickness of resistor (1)], in the strain gauge installed on the Roberval-type strain generator, as long as the film thickness of the resistor 30 is greater than or equal to 6 nm and less than or equal to 100 nm, the creep amount and the creep recovery amount of the C1 standards can be satisfied. Further, as long as the film thickness of the resistor 30 is greater than or equal to 6 nm and less than or equal to 50 nm, the creep amount and the creep recovery amount of the C1 standards can be satisfied, and the strain limit can be improved.

In addition, as long as the film thickness of the resistor 30 is greater than or equal to 11 nm and less than or equal to 50 nm, the creep amount and the creep recovery amount of the C2 standards can be satisfied. In this case, regardless of the film thickness of the resistor 30, it can be stated that the strain limit is sufficient enough as being greater than or equal to 10,000 uε.

### [Method of manufacturing strain gauge]

Here, a method of manufacturing the strain gauge 1 will be described. In order to manufacture the strain gauge 1, first, the substrate 10 is prepared and a metallic layer (referred to as a metallic layer A for the sake of convenience) is formed on the upper surface 10a of the substrate 10. The metallic layer A is a layer that is finally patterned to become the resistor 30, the wire 40, and the electrodes 50. Therefore, the material and thickness of the metallic layer A are the same as the material and thickness of the resistor 30, the wire 40, and the electrodes 50 as described above.

The metallic layer A can be deposited by magnetron sputtering in which, for example, a raw material from which the metallic layer A can be formed is set as the target. Instead of the magnetron sputtering, the metallic layer A may be deposited by reactive sputtering, vapor deposition, arc ion plating, pulsed laser deposition, or the like.

From the viewpoint of stabilizing the gauge characteristics, before depositing the metallic layer A, as a base layer, it is favorable to vacuum-deposit a functional layer having a predetermined film thickness on the upper surface 10a of the substrate 10, for example, by conventional sputtering.

In the present application, the functional layer refers to a layer that has a function of promoting crystal growth of at least the metallic layer A (resistor 30) being an upper layer. It is further favorable for the functional layer to have a function of preventing oxidation of the metallic layer A caused by oxygen and moisture contained in the substrate 10, and a function of improving adhesion between the substrate 10 and the metallic layer A. The functional layer may further have other functions as well.

As the insulating resin film that forms the substrate 10 contains oxygen and moisture, in the case where the metallic layer A contains Cr in particular, it is effective that the functional layer has a function of preventing oxidation of the metallic layer A, because Cr forms a self-oxidation film.

The material of the functional layer is not limited in particular as long as that it is a material having a function of promoting crystal growth of at least the metallic layer A (resistor 30) being an upper layer, and can be appropriately selected in accordance with the purpose; for example, one or more metals selected from among a group consisting of Cr (chromium), Ti (titanium), V (vanadium), Nb (niobium), Ta (tantalum), Ni (nickel), Y (yttrium), Zr (zirconium), Hf (hafnium), Si (silicon), C (carbon), Zn (zinc), Cu (copper), Bi (bismuth), Fe (iron), Mo (molybdenum), W (tungsten), Ru (ruthenium), Rh (rhodium), Re (rhenium), Os (osmium), Ir (iridium), Pt (platinum), Pd (palladium), Ag (silver), Au (gold), Co (cobalt), Mn (manganese), and Al (aluminum); an alloy of any metals in the group; or a compound of any metal in the group may be enumerated.

As the alloy described above, FeCr, TiAl, FeNi, NiCr, CrCu, and the like may be enumerated. In addition, as the compound described above, TiN, TaN, Si₃N₄, TiO₂, Ta₂O₅, SiO₂, and the like may be enumerated.

In the case where the functional layer is formed of a conductive material such as a metal or an alloy, the film thickness of the functional layer is favorably less than or equal to one-twentieth of the film thickness of the resistor. By being within such a range, crystal growth of α-Cr can be promoted; in addition, reduction in detection sensitivity of strain can be prevented that would be caused by part of the current flowing through the resistor flowing to the functional layer.

In the case where a functional layer is formed of the conductive material such as a metal or an alloy, it is more favorable that the film thickness of the functional layer is less than or equal to one-fiftieth of the film thickness of the resistor. By being within such a range, crystal growth of α-Cr can be promoted; in addition, reduction in detection sensitivity of strain can be prevented that would be caused by part of the current flowing through the resistor flowing to the functional layer.

In the case where the functional layer is formed of the conductive material such as a metal or an alloy, the film thickness of the functional layer is further favorably one-hundredth or less the film thickness of the resistor. By being within such a range, a portion of the current flowing through the resistor flows through the functional layer, and thus reductions in detection sensitivity of strain can be further prevented.

In the case where the functional layer is formed of an insulating material such as an oxide or a nitride, the film thickness of the functional layer is favorably 1 nm to 1 um. By being within such a range, crystal growth of α-Cr can be promoted, and the film can be easily formed without having cracks in the functional layer.

In the case where the functional layer is formed of an insulating material such as an oxide or a nitride, the film thickness of the functional layer is more favorably 1 nm to 0.8 um. By being within such a range, crystal growth of α-Cr can be promoted, and the film can be further easily formed without having cracks in the functional layer.

In the case where the functional layer is formed of an insulating material such as an oxide or a nitride, the film thickness of the functional layer is even more favorably 1 nm to 0.5 um. By being within such a range, crystal growth of α-Cr can be promoted, and the film can be formed more easily without having any cracks in the functional layer.

Note that the planar shape of the functional layer is patterned to be substantially the same as the planar shape of the resistor as illustrated in FIG. 3. However, the planar shape of the functional layer is not limited to the case of being substantially the same as the planar shape of the resistor. In the case where the functional layer is formed of an insulating material, the planar shape of the functional layer does not need to be patterned to be the same shape as the planar shape of the resistor. In this case, the functional layer may be solidly formed at least in a region where the resistor is formed. Alternatively, the functional layer may be solidly formed on the entire upper surface of the substrate 10.

In the case where the functional layer is formed of an insulating material, by forming the functional layer to be relatively thick so as to make the thickness of the functional layer greater than or equal to 50 nm and less than or equal to 1 µm, and forming solidly, the thickness and surface area of the functional layer are increased, and hence, heat generated when the resistor generates heat can be dissipated to the substrate 10 side. As a result, in the strain gauge 1, reduction in measurement accuracy due to self-heating of the resistor can be suppressed.

The functional layer can be vacuum-deposited by, for example, conventional sputtering that uses a raw material from which the functional layer can be formed as the target, and introduces an Ar (argon) gas in the chamber. By using conventional sputtering, the functional layer is deposited while the upper surface 10a of the substrate 10 is etched with Ar, and hence, a deposited amount of the film of the functional layer can be minimized to obtain an effect of improved adhesion.

However, this is an example of a method of depositing the functional layer, and the functional layer may be formed by any other method. For example, before depositing the functional layer, the upper surface 10a of the substrate 10 is activated by a plasma treatment or the like using Ar or the like to obtain an effect of improved adhesion, and then, the functional layer may be vacuum-deposited by magnetron sputtering.

The combination of the material of the functional layer and the material of the metallic layer A is not limited in particular, and can be appropriately selected in accordance with the purpose; for example, as the functional layer, Ti may be used, and as the metallic layer A, a Cr composite film containing α-Cr (alpha-chromium) as the main component may be deposited.

In this case, the metallic layer A can be deposited by, for example, magnetron sputtering that uses a raw material from which a Cr composite film can be formed as the target, and introduces an Ar (argon) gas in the chamber. Alternatively, the metallic layer A may be deposited by reactive sputtering that uses pure Cr as the target, and introduces an Ar (argon) gas together with an appropriate amount of nitrogen gas in the chamber. In this case, by changing the introduced amount of the nitrogen gas or pressure (partial pressure of nitrogen) of the nitrogen gas, or by providing a heating process to adjust the heating temperature, a percentage of CrN and Cr₂N contained in the Cr composite film and a percentage of Cr₂N in CrN and Cr₂N can be adjusted.

In these methods, a growth face of the Cr composite film is defined by the functional layer formed of Ti, and the Cr composite film that has α-Cr as the main component having a stable crystalline structure can be deposited. In addition, Ti forming the functional layer is diffused into the Cr composite film, and thereby, the gauge characteristics are improved. For example, the gauge factor of the strain gauge 1 can be greater than or equal to 10, and the gauge factor temperature coefficient TCS and the temperature coefficient of resistance TCR can fall within a range of - 1,000 ppm/°C to +1,000 ppm/°C. Note that, in the case where the functional layer is formed of Ti, in some cases, the Cr composite film contains Ti or TiN (titanium nitride).

Note that, in the case where the metallic layer A is a Cr composite film, the functional layer formed of Ti includes all functions of a function of promoting crystal growth of the metallic layer A, a function of preventing oxidation of the metallic layer A caused by oxygen or moisture contained in the substrate 10, and a function of improving adhesion between the substrate 10 and the metallic layer A. The same applied to the case where, instead of Ti, the functional layer is formed of Ta, Si, Al, or Fe.

In this way, by providing the functional layer as a lower layer of the metallic layer A, the crystal growth of the metallic layer A can be promoted, and the metallic layer A having a stable crystalline phase can be manufactured. As a result, in the strain gauge 1, stability of the gauge characteristics can be improved. In addition, by having a material that forms the functional layer diffused into the metallic layer A, in the strain gauge 1, the gauge characteristics can be improved.

Next, the metallic layer A is patterned by photolithography, to form the resistor 30, the wire 40, and the electrodes 50.

Thereafter, as necessary, by forming the cover layer 60 on the upper surface 10a of the substrate 10 to cover the resistor 30 and the wire 40 and expose the electrodes 50, the strain gauge 1 is completed. The cover layer 60 can be produced, for example, by laminating on the upper surface 10a of the substrate 10 a thermosetting insulating resin film in a semi-cured state so as to cover the resistor 30 and the wire 40 and expose the electrodes 50, and by heating the film to be cured. The cover layer 60 may be produced by applying to the upper surface 10a of the substrate 10 a thermosetting insulating resin in a liquid or paste state so as to cover the resistor 30 and the wire 40 and expose the electrodes 50, and by heating the film to be cured.

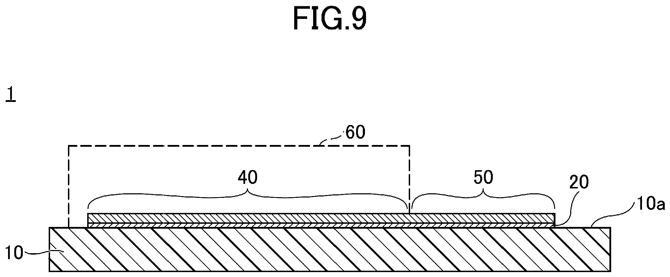

Note that in the case of providing the functional layer as a base layer of the resistor 30, the wire 40, and the electrodes 50 on the upper surface 10a of the substrate 10, the strain gauge 1 comes to have a cross-sectional shape illustrated in FIG. 9. A layer indicated by a reference numeral 20 is the functional layer. In the case of providing the functional layer 20, the planar shape of the strain gauge 1 is, for example, substantially the same as illustrated in FIG. 3. However, as described above, the functional layer 20 may be solidly formed partially or entirely on the upper surface of the substrate 10.

As above, the favorable embodiments and the like have been described in detail; note that the present inventive concept is limited to these embodiments and the like described above, and various modifications and replacements to the embodiments and the like described above can be made without departing from a scope set forth in the claims.

For example, in FIGs. 1 and the like, although an example of installing four strain gauges 1 on the load cell 100 is illustrated, one strain gauge having four resistors formed on one substrate may be installed. In this case, the respective resistors may be connected by wires provided on the substrate for the sake of convenience for forming a bridge connection.

In addition, the number of resistors to be installed on the load cell 100 may be two. In this case, the respective resistors can be connected to form a half bridge.

In addition, the resistors on the load cell 100 are not limited to being installed on either the upper surface or the lower surface of the load cell 100, and may be installed on both the upper surface and the lower surface. For example, two resistors may be installed on the upper surface of the load cell 100, and two resistors may be further installed on the lower surface.

The present International application claims priority to Japanese Patent Application No. 2021-096391 filed on June 9, 2021, and the contents of Japanese Patent Application No. 2021-096391 are incorporated herein by reference in their entirety.

### List of Reference Numerals

1 strain gauge, 10 substrate, 10a upper surface, 20 functional layer, 30 resistor, 30e₁, 30e₂ terminal, 40 wire, 50 electrode, 60 cover layer, 100 load cell, 110 strain generator, 120 through hole, 131, 132 recess, 141 to 144 thin wall potion

## Claims

1. A strain gauge installed on a Roberval-type strain generator, the strain gauge comprising:
a substrate having flexibility; and
a resistor formed of a film that contains Cr, CrN, and Cr₂N over the substrate,
wherein a film thickness of the resistor is greater than or equal to 6 nm and less than or equal to 100 nm.

2. The strain gauge according to claim 1, wherein the film thickness of the resistor is greater than or equal to 6 nm and less than or equal to 50 nm.

3. The strain gauge according to claim 2, wherein the film thickness of the resistor is greater than or equal to 11 nm and less than or equal to 50 nm.

4. The strain gauge according to any one of claims 1 to 3, wherein a gauge factor is greater than or equal to 10.

5. The strain gauge according to any one of claims 1 to 4, wherein a percentage of CrN and Cr₂N contained in the resistor is less than or equal to 20% by weight.

6. The strain gauge according to any one of claims 1 to 5, wherein a percentage of Cr₂N in CrN and Cr₂N is greater than or equal to 80% by weight and less than 90% by weight.

7. A load cell comprising:
a strain generator of a Roberval type; and
the strain gauge as claimed in any one of claims 1 to 6 installed on the strain generator.

8. The load cell as claimed in claim 7, further comprising:
a plurality of instances of the resistor.
